# EUROPÄISCHE PATENTANMELDUNG

(11) **EP 2 267 650 A1**
(43) Veröffentlichungstag der Anmeldung: **29.12.2010**
(21) Anmeldenummer: 10167410.9
(22) Anmeldetag: 25.06.2010
(51) Int. Cl.: G06Q 10/00

(54) **Zustandsorientierte Instandhaltung**

(30) Priorität: 25.06.2009 EP 09008300
(71) Anmelder: Hitachi Power Europe GmbH, 47059 Duisburg (DE)
(72) Erfinder: Clemens, Liisa, 45259 Essen (DE); Braun, Tanja, 47226, Duisburg (DE); Furth, Thomas, 40237 Düsseldorf (DE)
(74) Vertreter: Viering, Jentschura & Partner

(57) **Zusammenfassung**

Bei einem Verfahren zur zustandsorientierten Instandhaltung eines, insbesondere fossilbefeuerten, vorzugsweise kohlebefeuerten, Kraftwerks auf Basis von automatisiert erstellten Instandhaltungsempfehlungen für die Kraftwerksanlage und/oder einzelne technische Komponenten oder technische Systeme der Kraftwerksanlage, die jeweils ein instandzuhaltendes Element ausbilden oder ein oder mehrere instandzuhaltende Elemente umfassen, wobei der Instandhaltungsbedarf eines oder mehrerer der instandzuhaltenden Elemente anhand mindestens eines vom jeweiligen Einsatz- oder Anwendungsfall des instandzuhaltenden Elementes abhängigen Einflussfaktor ermittelt wird, soll erreicht werden, eine Lösung zu schaffen, das die Ermittlung des Lebensdauerverbrauches einer Kraftwerkskomponente und die Prognose der Lebensrestdauer ermöglicht. Dies wird dadurch erreicht, dass der Einflussfaktor online bei Betrieb der Kraftwerksanlage zeitaktuell gemessen oder ermittelt und erfasst wird und/oder offline außer Betrieb gemessen oder ermittelt und erfasst wird und aus dem erfassten Einflussfaktor oder einer Kombination mehrerer erfasster Einflussfaktoren mittels einer wissensbasierten Prognose und/oder eines wissensbasierten Vergleichs eine zustandsorientierte Instandhaltungsempfehlung und/oder ein zustandsorientierter Instandhaltungsbedarf abgeleitet wird.

## Beschreibung

Die Erfindung richtet sich auf ein Verfahren zur zustandsorientierten Instandhaltung eines, insbesondere fossilbefeuerten, vorzugsweise kohlebefeuerten, Kraftwerks auf Basis von automatisiert erstellten Instandhaltungsempfehlungen für die Kraftwerksanlage und/oder einzelne technische Komponenten oder technische Systeme der Kraftwerksanlage, die jeweils ein instandzuhaltendes Element ausbilden oder ein oder mehrere instandzuhaltende Elemente umfassen, wobei der Instandhaltungsbedarf eines oder mehrerer der instandzuhaltenden Elemente anhand mindestens eines vom jeweiligen Einsatz- oder Anwendungsfall des instandzuhaltenden Elementes abhängigen Einflussfaktor ermittelt wird.

Die Zustandsüberwachung von Anlagenteilen und die somit ermöglichte zustandsorientierte Instandhaltung ist in kraftwerksfremden Branchen wie der Automobilbranche weit verbreitet. In fossil-, besonders in kohlebefeuerten Kraftwerken hingegen ist eine Zustands- oder Lebensdauerüberwachung nur für drehende Teile und dickwandige Bauteile Stand der Technik. Die Lebensdauerberechnung von Überhitzerrohren ist zum heutigen Zeitpunkt nur vorausschauend in der Auslegungsphase, also als reines Prognosemodell, möglich.

Der Erfindung liegt daher die Aufgabe zugrunde, eine Lösung zu schaffen, das die Ermittlung des Lebensdauerverbrauches einer Kraftwerkskomponente und die Prognose der Lebensrestdauer ermöglicht.

Bei einem Verfahren der eingangs näher bezeichneten Art wird diese Aufgabe dadurch gelöst, dass der Einflussfaktor online bei Betrieb der Kraftwerksanlage zeitaktuell gemessen oder ermittelt und erfasst wird und/oder offline außer Betrieb gemessen oder ermittelt und erfasst wird und aus dem erfassten Einflussfaktor oder einer Kombination mehrerer erfasster Einflussfaktoren mittels einer wissensbasierten Prognose und/oder eines wissensbasierten Vergleichs eine zustandsorientierte Instandhaltungsempfehlung und/oder ein zustandsorientierter Instandhaltungsbedarf abgeleitet wird.

In Ausgestaltung sieht die Erfindung vor, dass aus dem mindestens einen erfassten Einflussfaktor ein aktueller Zustand oder aktueller Zustandswert des instandzuhaltenden Elementes, insbesondere durch Bewertung und/oder Berechnung, erhalten und/oder abgeleitet wird und aus diesem aktuellen Zustand oder aktuellen Zustandswert mittels der wissensbasierten Prognose und/oder des wissensbasierten Vergleichs die zustandsorientierte Instandhaltungsempfehlung und/oder der zustandsorientierte Instandhaltungsbedarf abgeleitet wird.

Aus dem ermittelten Zustand bzw. dem ermittelten Zustandswert kann abgeleitet werden, ob eine Reparatur des jeweiligen instandzuhaltenden Elements sofort oder innerhalb eines definierten Zeitraumes erforderlich ist, oder ob gar keine Reparatur erforderlich ist. Dies kann vorzugsweise visuell mittels einer Lichtzeichenanlage in Form einer Ampel mit rot, gelb und grün aufleuchtbaren Signalen dem Personal der Kraftwerksanlage angezeigt werden.

Durch die Erfindung wird ein Verfahren bereitgestellt, das als System oder Komponente an einer Kraftwerksanlage an jedem beliebigen Kraftwerksstandort implementiert werden kann und so zur Prognose von Instandhaltungsempfehlungen und zur Ermittlung des Instandhaltungsbedarfes genutzt werden kann. Dies leistet einen Beitrag zur Know-how Sicherung, da ein wissensbasierter Vergleich des ermittelten Ist-Zustandes mit wissensbasierten Instandhaltungsempfehlungen eine wissensbasierte Instandhaltungsprognose ermöglicht, die auf aktuell ermittelten zustandsorientierten Daten beruht. Hierdurch kann eine verbesserte Instandhaltung erreicht werden, wodurch die Seviceaktivitäten und notwendigen Instandhaltungsarbeiten unterstützt und verbessert werden können.

Das erfindungsgemäße Verfahren ermöglicht ein Ermitteln und Bewerten des Zustandes von ausgewählten Kraftwerksbauteilen oder instandzuhaltenden Elementen vorzugsweise in Echtzeit. Die Überwachung der Zustände dieser Elemente ermöglicht eine zustandsorientierte Instandhaltung. Damit wird die Planung von Wartungsaktivitäten optimiert, so dass gegebenenfalls Reparaturen in einem wirtschaftlich günstigen Zeitraum durchgeführt und kürzere Stillstandszeiten bei Revisionen erreicht werden können. Durch die durch das erfindungsgemäße Verfahren ermöglichte Echtzeit-Vorhersage des Zustandes der instandzuhaltenden Elemente bzw. Bauteile können ungeplante Stillstände der Kraftwerksanlage reduziert, eine verbesserte Planung von Revisionen ermöglicht, die Abstände zwischen den Inspektionen vergrößert werden und die dabei notwendigen Stillstandzeiten reduziert werden. Zudem kann die Sicherheit während des Betriebes der Kraftwerksanlage erhöht werden.

Um eine möglichst große Zeitersparnis mit dem erfindungsgemäßen Verfahren erreichen zu können, wird als das zu prüfende instandzuhaltende Element, das Element aus einer Vielzahl von gleichartigen Elementen ausgewählt, welches das höchst beanspruchteste ist. Bei beispielsweise sechs Brennern wird der Brenner untersucht, welcher den höchsten Beanspruchungen ausgesetzt ist. Zeigt dieses höchst beanspruchteste Element einen kritischen Zustand an, so wird in Abhängigkeit dieses Elements entschieden, ob Wartungsarbeiten oder Austauscharbeiten für alle artgleichen Elemente, beispielsweise alle Brenner, vorgenommen werden sollen.

Das erfindungsgemäße Verfahren zur zustandsorientierten Instandhaltung stellt somit ein Verfahren dar, dass die zustandsorientierte Instandhaltung von, insbesondere fossilbefeuerten, vorzugsweise kohlebefeuerten, Kraftwerken bzw. Kraftwerksanlagen durch die automatisierte Erstellung von Instandhaltungsempfehlungen aus der Kenntnis des Anlagenzustandes unterstützt. Der Zustand der Kraftwerksanlage setzt sich dabei vorzugsweise aus den Zuständen der einzelnen technischen Komponenten und/oder technischen Systeme der Kraftwerksanlage zusammen. Diese Zustände können automatisiert anhand mindestens eines vom jeweiligen Einsatz- oder Anwendungsfall abhängigen Einflussfaktors ermittelt werden. Das erfindungsgemäße Verfahren ist dabei vorzugsweise für instandzuhaltende Elemente bzw. Bauteile einer Kraftwerksanlage, welche keine drehenden Teile aufweisen bzw. umfassen, einsetzbar.

Die mittels der Zustandsüberwachung zu erfassenden, instandzuhaltenden Elemente einer Kraftwerksanlage können beispielsweise sein:
- Mühle, Staubleitungen, Kohlezuteilung
- Brenner, ABL/OFA und Seitenluftsystem, Nassentascher, Entaschung
- Rohrleitungen, Rauchgasleitungen bzw. Rauchgaskanäle, Luftleitungen bzw. Luftleitkanäle, Kohlenstaubkanäle
- Druckteil, Rußbläser, Wasserbläser oder Wasserlanzenbläser, Umwälz- und Anfahreinrichtung, HD-Bypass, ZUE-Sicherheitsventil, Entwässerungs/Entlüftungssystem
- Filter, REA, DeNOx, Regenerativ- und Dampfluvo
- Gebläse, Saugzug
- Dickwandige Bauteile (Sammler, Verbindungsleitungen, etc.)
- Dampferzeuger (Ventile, Heizflächen, Sammler)
- Luftvorwärmer

Das erfindungsgemäße Verfahren, das automatisch Instandhaltungsempfehlungen erstellen kann, ermöglicht es, die Instandhaltung einzelner Komponenten einer Kraftwerksanlage, insbesondere der Kesselkomponenten, systematisch und zustandorientiert zu gestalten. Eine zustandsorientierte Instandhaltung, bei der Wartungsarbeiten in Abhängigkeit von dem Zustand der instandzuhaltenden Elemente geplant werden, bietet unter anderem den Vorteil, dass die Verfügbarkeit der instandzuhaltenden Elemente und damit der gesamten Kraftwerksanlage erhöht und die Instandhaltungskosten verringert werden können. Mittels der zustandsorientierten Instandhaltung kann die Planung von Serviceaktivitäten optimiert werden, so dass beispielsweise notwendige Reparaturen zu einem möglichst wirtschaftlich günstigen Zeitpunkt durchgeführt werden können.

Mittels des erfindungsgemäßen Verfahrens kann eine systematische Ermittlung und Archivierung der tatsächlichen, aktuellen Zustände bzw. Bauteilzustände der instandzuhaltenden Elemente erfolgen, wobei aus den dabei entstehenden Daten eine Datensammlung erzeugt werden kann, mit deren Hilfe Bauteilzustände und Betriebszustände korreliert werden können.

Zur Ermittlung der Bauteilzustände und Ableitung von Instandhaltungsempfehlungen ist ein computergestütztes System vorgesehen. Dieses System weist vorzugsweise Algorithmen, insbesondere Berechnungsalgorithmen auf, die in Abhängigkeit von mindestens einem vom jeweiligen Einsatz- oder Anwendungsfall abhängigen Einflussfaktor den Zustand des instandzuhaltenden Elements ermitteln. Mittels der Algorithmen kann der Ist-Zustand der instandzuhaltenden Elemente zum aktuellen Zeitpunkt und der prognostizierte Zustand in der Zukunft berechnet werden. Mittels diesen Informationen über den Zustand der instandzuhaltenden Elemente können mit Hilfe von aufgestellten Regeln Instandhaltungsempfehlungen für den aktuellen Zeitpunkt und für die Zukunft abgeleitet werden.

Die Algorithmen, die zur Berechnung der Bauteilzustände verwendet werden, können physikalische oder empirische Formeln sein, die den Zusammenhang zwischen den Einflussfaktoren und der Zustandsgrößen wiedergeben. Bei instandzuhaltenden Elementen, bei denen ein physikalischer oder empirischer Zusammenhang mit den aktuellen Zuständen nicht herzustellen ist, kann der Bauteilzustand aus in der Vergangenheit stattgefundenen Offline-Messungen extrapoliert werden. Daher erfolgt vorzugsweise auch eine Offline-Bestimmung der tatsächlichen Bauteilzustände, wobei die dabei ermittelten Zustandsgrößen ebenfalls in dem computergestützten System strukturiert abgelegt und automatisiert ausgewertet werden. Wenn die Datensammlung bzw. die Datenbasis ausreichend groß ist, können für die Ermittlung der Zustandsgrößen aus ihren Einflussfaktoren auch neuronale Netze eingesetzt werden. Die in dem computergestützten System abgelegten Zustandsgrößen können auch über eine Online-Kommunikation zu einer ortsfern vorgesehenen Zustandsdiagnose und Modellierung übermittelt werden, so dass die Auswertung der Zustandsgrößen unabhängig von der Position bzw. dem Standort des computergestützten Systems erfolgen kann.

Mittels des erfindungsgemäßen Verfahrens bzw. des erfindungsgemäßen Systems kann der Betrieb einer

Kraftwerksanlage bzw. der einzelnen instandzuhaltenden Elemente einer Kraftwerksanlage optimiert werden, beispielsweise im Bereich der Verfahrenstechnik oder in Form einer Rußbläseroptimierung. Gleichzeitig können Bauteilzustände überwacht werden, wodurch zum Beispiel die zu erwartende Lebensdauer der Kraftwerksanlage bzw. der instandzuhaltenden Elemente der Kraftwerksanlage bestimmt werden kann. Das erfindungsgemäße Verfahren bzw. das erfindungsgemäße System dient ferner dazu, Offline-Messungen zu organisieren, auszuwerten und zu dokumentieren, zum Beispiel in Form von Verschleißmessungen, mit denen bestimmt werden kann, wann und wo der Verschleiß aufgetreten ist oder wahrscheinlich noch auftreten wird. Zudem kann hiermit die Instandhaltungsplanung verbessert werden, beispielsweise indem durch die Kenntnis über den Zeitpunkt, wann voraussichtlich die nächsten Wartungs- oder Reparaturarbeiten durchgeführt werden müssen, so geplant werden kann, dass zu diesem Zeitpunkt dann auch das notwendige Personal und die notwendigen Materialien zur Verfügung stehen, so dass die Stillstandzeiten der instandzuhaltenden Elemente bzw. der Kraftwerksanlage möglichst gering halten zu können. Ferner kann hiermit das Know-how des Instandhaltungspersonals gesichert werden, da die Erfahrungswerte des Personals mit in die Berechnungen einfließen und dort gesammelt werden, so dass die gesamte Organisation der Instandhaltung an die Erfahrungswerte angepasst werden kann.

Zur Durchführung des erfindungsgemäßen Verfahrens kann in vorteilhafter Weise je Block eines Kraftwerkes bzw. einer Kraftwerksanlage ein System bzw. ein Instandhaltungssystem implementiert und ausgebildet sein, mit welchem das erfindungsgemäße Verfahren durchführbar ist. Zur unmittelbaren Anzeige der mittels dem erfindungsgemäßen Verfahren ermittelten zustandsorientierten Instandhaltungsempfehlung und/oder dem zustandsorientierten Instanthaltungsbedarf für das Personal, damit dieses möglichst schnell auf dieses ermittelte Ergebnis reagieren kann, weist das System eine Lichtzeichenanlage mit einer Ampelfunktion, d. h. mit einem roten, gelben und grünem Lichtzeichen bzw. Signal, auf. Bei Erleuchten eines roten Lichtes wird ein schlechter Bauteilzustand des instandzuhaltenden Elements angezeigt, wodurch dem Personal angegeben wird, dass dieses Element repariert oder ausgetauscht werden sollte. Erscheint ein gelbes Licht auf der Lichtzeichenanlage erfolgt eine Warnung, dass das instandzuhaltende Element einen kritischen Bauteilzustand aufweist, so dass in naher Zukunft Wartungs- oder Austauscharbeiten geplant werden sollten. Erscheint ein grünes Licht auf der Lichtzeichenanlage, so weist das instandzuhaltende Element einen guten Bauteilzustand auf, so dass das Personal weiß, dass vorläufig keine Reparatur- oder Austauscharbeiten vorgenommen werden müssen. Das System weist dabei ferner vorzugweise eine Schnittstelle zur Leitwarte des Kraftwerks bzw. der Kraftwerksanlage auf.

Das System bzw. das Verfahren ist dabei vorzugsweise derart ausgebildet, dass zunächst Betriebsdaten gesammelt werden, aus den gesammelten Betriebsdaten beispielsweise der Grad des Verschleißes eines instandzuhaltenden Elements ermittelt bzw. berechnet wird, woraus wiederum eine Einschätzung bzw. Abschätzung des Bauteilzustandes des instandzuhaltenden Elements vorgenommen werden kann. Die dabei gewonnenen Informationen werden anschließend noch einmal vorzugsweise mittels Offline-Messungen überprüft.

Das Sammeln von Betriebsdaten kann sowohl aus Online-Messungen, aus Offline-Messungen und/oder aus Analysen, zum Beispiel Kohleanalysen, erfolgen. Aus diesen gesammelten Betriebsdaten kann anschließend der Grad' des Verschleißes ermittelt bzw. berechnet werden, was beispielsweise durch eine Korrelation, beispielsweise eine physikalische oder empirische Korrelation, zwischen den Einflussfaktoren, durch welche ein Verschleiß hervorgerufen werden kann, und dem tatsächlichen Verschleiß der instandzuhaltenden Elemente erfolgen kann. Anhand des ermittelten Verschleißgrades kann nun der Bauteilzustand der instandzuhaltenden Elemente abgeschätzt bzw. eingeschätzt werden. Dies erfolgt vorzugsweise durch einen Vergleich des ermittelten Verschleißgrades mit den bisherigen Erfahrungen. Die dabei ermittelten aktuellen und zukünftigen Bauteilzustände können dann mittels einer Lichtzeichenanlage angezeigt werden, wobei die Lichtzeichenanlage vorzugsweise in Form einer Ampel ausgebildet ist. Dieser Schritt des Einschätzens bzw. des Abschätzens der Bauteilzustände erfolgt vorzugsweise kontinuierlich und während des Betriebes der instandzuhaltenden Elemente bzw. der Kraftwerksanlage. Dadurch wird eine Identifikation der in Bezug ihres Bauteilzustandes kritischen instandzuhaltenden Elemente vor deren Ausfall ermöglicht. In einem weiteren Schritt können die zuvor ermittelten Bauteilzustände mittels Offline-Messungen des Verschleißgrades geprüft bzw. verifiziert werden. In Abhängigkeit des dabei ermittelten Ergebnisses kann der Berechnungsablauf zum Ermitteln des Bauteilzustandes durch Nutzung von Prüfmessungen und gesammelten Betriebsdaten verbessert werden. Die hierbei gewonnen Informationen über den Verschleißgrad können wiederum für die Berechnung des aktuellen und des zukünftigen Lebensdauerverbrauches verwendet werden.

In dem System sind vorzugsweise Berechnungsformeln hinterlegt, die den Lebensdauerverbrauch der instandzuhaltenden Elemente bedingt durch Verschleiß, Erosion, Korrosion, thermische Ermüdung, etc. aus Online- und/oder Offline-Messungen ermitteln können. Ist zum Beispiel für ein Bauteil ein maximaler Wanddickenverlust vorgegeben, bei der das instandzuhaltende Element ausgewechselt werden muss, so wird der berechnete Wanddickenverlust nach Erreichen eines Grenzwertes als "beachtenswert" zum Beispiel durch Farbumschlag auf der Lichtzeichenanlage von grün auf gelb signalisiert. Dieser Grenzwert bestimmt sich in Abhängigkeit des jeweils zu prüfenden Elements und ist abhängig vom Schädigungsmechanismus. Ferner wird in dem Grenzwert, bei Berechnung des Wanddickenverlusts, die Geschwindigkeit des Wanddickenverlusts berücksichtigt, so dass eine Art Zeitreserve zur Vorbereitung des Wartungsvorganges eingearbeitet bzw. berücksichtigt werden kann. Bei Erreichen eines maximalen Wanddickenverlustes wird auf der Lichtzeichenanlage rot angezeigt, wodurch eine sofortige Warnung signalisiert wird.

Ferner kann mit dem erfindungsgemäßen System bzw. dem erfindungsgemäßen Verfahren die maximal noch zur Verfügung stehende Betriebslaufzeit prognostiziert werden. Wird für eine Kraftwerksanlage zum Beispiel ein längerer Stillstand in zwei Jahren geplant, kann eine Prognoserechnung für alle relevanten instandzuhaltenden Elemente bezüglich ihres Bauteilzustandes durchgeführt werden. Werden bei dieser Prognoserechnung für alle instandzuhaltenden Elemente, insbesondere für die höchstbeanspruchtesten Elemente von jeweils artgleichen Elementen, grüne oder gelbe Werte erreicht, so kann der Stillstand wie geplant in zwei Jahren erfolgen. Werden hingegen auch einige instandzuhaltende Elemente bei der Prognoserechnung mit rot gekennzeichnet, so sollten diese Elemente früher gewartet werden oder der geplante Stillstand sollte zeitlich vorgezogen werden.

Weiter kann das erfindungsgemäße Verfahren dazu verwendet werden, eine Warnung auszugeben, beispielsweise im Falle einer schnellen Temperaturänderung eines instandzuhaltenden Elements, wobei die Warnung derart ausgebildet sein kann, dass angezeigt wird, dass die Belastung des instandzuhaltenden Elements reduziert werden soll oder das Element oder gar die ganze Kraftwerksanlage abgeschaltet werden soll.

Nachfolgend wird die Erfindung unter Bezugnahme auf die anliegenden Zeichnungen anhand bevorzugter Ausführungsformen näher erläutert.

Es zeigen:
- Fig. 1: ein Flussdiagramm zur schematischen Darstellung einer erfindungsgemäßen zustandsorientierten Instandhaltungsermittlung;
- Fig. 2: ein Flussdiagramm zur schematischen Darstellung einer erfindungsgemäßen Automatisierung und Know- how Sicherung;
- Fig. 3: eine schematische Darstellung eines Verfahrensablaufs für eine Zustandsbestimmung eines instandzuhaltenden Elements;
- Fig. 4: ein Flussdiagramm zur schematischen Darstellung einer Ermittlung von Instandhaltungsempfehlungen gemäß dem erfindungsgemäßen Verfahren;
- Fig. 5: eine schematische Darstellung von instandzuhaltenden Elementen eines Dampferzeugers einer Kraftwerksanlage;
- Fig. 6: eine schematische Darstellung von instandzuhaltenden Elementen eines Brenners einer Kraftwerksanlage;
- Fig. 7: eine Auflistung von Methoden einer erfindungsgemäßen Zustandsdiagnose bzw. Zustandsbestimmung für einzelne ausgewählte instandzuhaltende Elemente eines Dampferzeugers;
- Fig. 8: eine schematische Darstellung eines Expertensystems zur Betriebsoptimierung;
- Fig. 9: eine schematische Darstellung einer allgemeinen Systemstruktur einer SR-Systemfamilie;

Die erfindungsgemäße zustandsorientierte Instandhaltung basiert darauf, relevante Messwerte des instandzuhaltenden Elements online bestimmen und erfassen zu können und vorzugsweise zusätzlich Informationen manuell, d. h. offline, erfassen zu können. Die aus diesen Messwerten und Informationen erhaltenen Daten werden ausgewertet, so dass anhand der ausgewerteten Daten der Bauteilzustand des jeweiligen instandzuhaltenden Elements bewertet werden kann. Daraus können dann zusätzlich Prognosen der zu erwartenden Schäden und Ausfälle erfolgen. Online-Messungen können beispielsweise mittels im Bereich der zu untersuchenden, instandzuhaltenden Elemente vorgesehenen Sensoren oder mittels Daten von verteilt angeordneten Kontrollsystemen erfolgen. Mittels Sensoren können beispielsweise Temperaturen, wie die Temperatur am Eintritt der Heizflächen oder die Temperatur der einzelnen Rohre, oder Partikelgrößen gemessen werden. Mittels des Kontrollsystems können beispielsweise die Anzahl der Abschaltungen und Neustarts sowie Taupunktfehlbeträge erfasst werden. Weiter können Daten mittels Soft-Sensoren ermittelt werden, beispielsweise in Form von modellbasierten Vorhersagen, bei welchen beispielsweise der Druck, der Massenstrom und die Abgastemperatur berechnet werden können. Offline-Messungen können beispielsweise durch manuelle Messungen während einer Revision oder manuelle Messungen während des Betriebes durchgeführt werden. Manuelle Messungen während einer Revision können beispielsweise in Form von Messungen der Abrasion und der Ablagerungen sein. Manuelle Messungen während des Betriebes können beispielsweise visuelle Untersuchungen spezieller instandzuhaltender Elemente sein. Mittels Offline-Messungen können beispielsweise die Wanddicke der instandzuhaltenden Elemente, wie Rohre, die Dicke der Oxidschicht der inneren Oberfläche und Korrosionsbelastungen gemessen bzw. ermittelt werden.

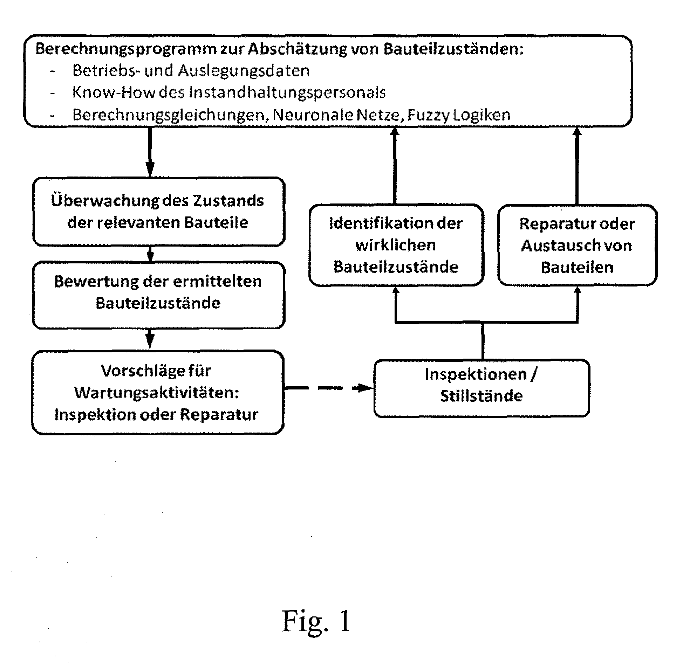

Fig. 1 zeigt ein Flussdiagramm für eine erfindungsgemäße zustandsorientierte Instandhaltungsermittlung. Hierfür ist ein Berechnungsprogramm zur Abschätzung von Bauteilzuständen der instandzuhaltenden Elemente vorgesehen, wobei das Berechnungsprogramm Betriebs- und Auslegungsdaten, Know-how des Instandhaltungspersonals sowie Berechnungsgleichungen, neuronale Netze und Fuzzy-Logiken umfassen kann. Mittels des Berechnungsprogramms bzw. der Informationen, die in dem Berechnungsprogramm eingegeben sind bzw. eingegeben werden, kann der Zustand der instandzuhaltenden Elemente überwacht werden. Aus den bei der Überwachung der instandzuhaltenden Elemente ermittelten Daten kann anschließend eine Bewertung der Bauteilzustände der instandzuhaltenden Elemente erfolgen, aus welchen wiederum die notwendige Wartungsaktivität, beispielsweise in Form einer Inspektion oder einer Reparatur, bestimmt werden kann. Aus der Bewertung der ermittelten Bauteilzustände kann somit eine Vorhersage des Zeitpunktes, wann das Bauteil wahrscheinlich nicht mehr funktionstüchtig sein wird, erfolgen. Bei dadurch veranlassten oder anderweitigen Inspektionen bzw. Stillständen der instandzuhaltenden Elemente kann zum einen der tatsächliche Bauteilzustand, beispielsweise durch eine Offline-Messung, bestimmt werden und/oder festgelegt werden, wann eine Reparatur oder ein Austausch der instandzuhaltenden Elemente notwendig ist. Die dabei ermittelten Daten und Informationen fließen wiederum in das Berechnungsprogramm ein, so dass mit der Zeit möglichst viele Daten in dem Berechnungsprogramm gesammelt werden können, um eine möglichst optimierte Einschätzung von Bauteilzuständen für den aktuellen Zeitpunkt und in der Zukunft zu erreichen.

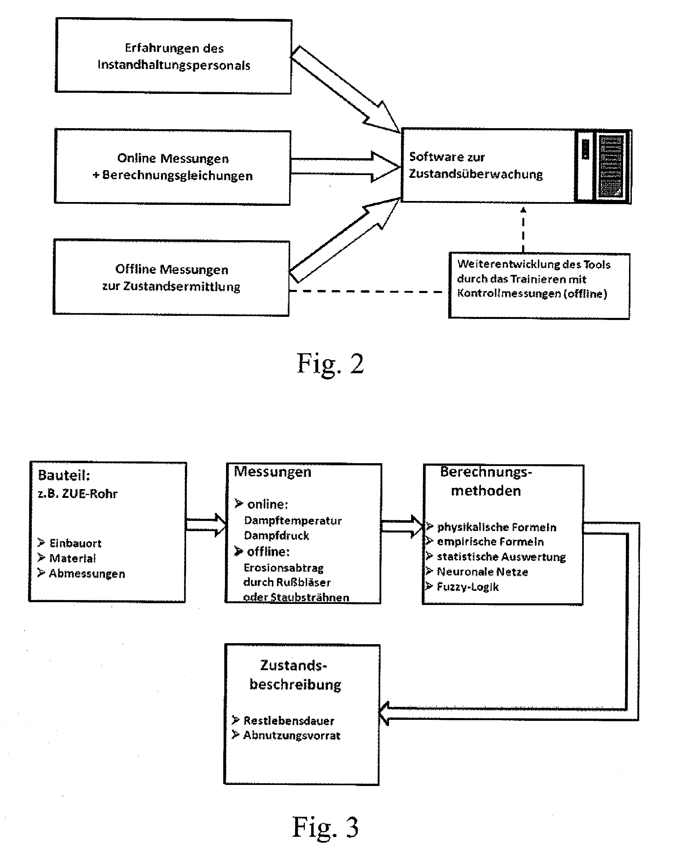

Die Automatisierung und Know-how Sicherung des erfindungsgemäßen Verfahrens bzw. des erfindungsgemäßen Systems erfolgt, wie in Fig. 2 zu sehen ist, über ein computergestütztes System, insbesondere eine Software zur Zustandsüberwachung, wobei in dieses System bzw. in die Software Daten bezüglich der Erfahrungen des Instandhaltungspersonals, Daten der Online-Messungen und Berechnungsgleichungen sowie Daten der Offline-Messungen zur Zustandsermittlung eingebracht, gesammelt und ausgewertet werden. Gleichzeitig kann das System bzw. die Software zur durch das Trainieren mit Kontrollmessungen, welche vorzugsweise offline erfolgen, weiterentwickelt und verbessert werden, indem auch die dabei ermittelten Daten in das System bzw. die Software mit einfließen.

Fig. 3 zeigt den Verfahrensablauf für eine Zustandsbestimmung eines Bauteils bzw. eines instandzuhaltenden Elements am Beispiel eines Zwischenüberhitzerrohres (ZUE-Rohr). In einem ersten Schritt wird das instandzuhaltende Element zunächst anhand von das instandzuhaltende Element beschreibenden Daten näher bestimmt bzw. beschrieben. Diese Daten können beispielsweise der Einbauort, das Material und/oder die Abmessungen des instandzuhaltenden Elements sein. Anschließend werden sowohl Online-Messungen als auch Offline-Messungen an dem instandzuhaltenden Element vorgenommen, wobei beispielsweise, wenn das instandzuhaltende Element ein Zwischenüberhitzerrohr ist, online der Dampfdruck und die Dampftemperatur und offline der Erosionsabtrag durch Rußbläser oder Staubsträhnen gemessen wird. In einem weiteren Schritt werden die offline und online gemessenen Daten mit verschiedenen Berechnungsmethoden, wie physikalischen Formeln, empirischen Formeln, statistischen Auswertungen, neuronalen Netzen und/oder Fuzzy-Logiken, ausgewertet. Aus den ausgewerteten Daten kann anschließend eine Zustandsbeschreibung des instandzuhaltenden Elements, beispielsweise in Form der Restlebensdauer oder des Abnutzungsvorrats, erfolgen.

Die Bestimmung des Bauteil Zustandes einer Kohledüse eines Brenners kann beispielsweise wie folgt erfolgen. In einem ersten Schritt werden die Schäden ermittelt, welche erfahrungsgemäß an dem instandzuhaltenden Element auftreten können. Daraus wird eine Aufgabe formuliert, was an dem instandzuhaltenden Element untersucht werden soll, um Instandhaltungsempfehlungen ausgeben zu können. Im Falle einer Kohledüse kann dies sein, nach wie vielen Arbeitsgängen Risse oder Brüche an der Kohledüse auftreten können. In einem zweiten Schritt wird dann der Grund des Schadens ermittelt. Dies kann durch Finite-Elemente-Methode(FEM)-Berechnungen erfolgen, bei der beispielsweise die Verteilung der Temperatur und der Spannungen an der Kohledüse während des Betriebes der Kohlebefeuerung bestimmt werden kann. Daraus kann abgeleitet werden, dass Risse oder Brüche durch häufige Arbeitswechsel zwischen Kohlebefeuerung und Luftkühlung auftreten bzw. hervorgerufen werden können. In einem dritten Schritt werden Felduntersuchungen durchgeführt. Bei den Felduntersuchungen kann beispielsweise das Materialverhalten beispielsweise mittels eines Woehler-Diagramms bestimmt werden, mittels welchem die Dehnungsbelastung in Abhängigkeit der Anzahl der Arbeitsdurchgänge bzw. der Arbeitswechsel ermittelt und dargestellt werden kann. In einem vierten Schritt erfolgt eine Berechnung, wobei bei diesem Beispiel die Eingabewerte für diese Berechnung das in Schritt drei ermittelte Woehler-Diagramm und die in Schritt zwei ermittelte Verteilung der Spannung in der Kohledüse mittels der FEM-Berechnungen sind. Diese Eingabewerte werden miteinander korreliert, wodurch die theoretische Anzahl an Arbeitsdurchgängen bzw. Arbeitswechseln bis zum ersten Risse oder zum ersten Bruch berechnet werden können. In einem letzten Schritt wird die zuvor berechnete theoretische Anzahl an Arbeitsdurchgängen bzw. Arbeitswechseln bis zum ersten Risse oder zum ersten Bruch noch einmal überprüft, indem die Anzahl der Arbeitswechsel zwischen Kohlebefeuerung und Luftkühlung gezählt werden. Die gezählte Anzahl wird dann mit der theoretischen Anzahl verglichen, wobei die kritische Anzahl an gezählten Arbeitswechseln weitergegeben wird. Daraus ergibt sich dann die endgültig bestimmte theoretische Anzahl an Arbeitswechseln bzw. Arbeitsdurchgängen bis zum ersten Risse oder zum ersten Bruch.

Die Bestimmung des Bauteilzustandes in Abhängigkeit von Erosion, welche durch Kohle- oder Aschepartikel hervorgerufen wird, kann wie folgt erfolgen. In einem ersten Schritt wird wieder der voraussichtlich auftretende Schaden bestimmt, aus welchem die Aufgabe formuliert werden kann, was an dem instandzuhaltenden Element untersucht werden soll, um Instandhaltungsempfehlungen ausgeben zu können. Die Aufgabe kann darin bestehen, die Erosion durch Kohle- oder Aschepartikel für verschiedene instandzuhaltende Elemente zu bestimmen bzw. zu berechnen. In einem zweiten Schritt wird der Grund des Schadens in Abhängigkeit der Einflussfaktoren für eine Erosion ermittelt. Die Einflussfaktoren können die Materialqualität, wie Härte, Form, Oberflächenbeschaffenheit, der instandzuhaltenden Elemente, die Partikelform, -größe und -härte der Kohle- oder Aschepartikel, der Eintrittswinkel der Kohle- oder Aschepartikel auf die instandzuhaltenden Elemente, der Art der Bewegung, wie Gleiten, Rollen oder Aufprallen, der Kohle- oder Aschepartikel und die Geschwindigkeit und die Konzentration der auftreffenden Kohle- oder Aschepartikel. In einem dritten Schritt werden Felduntersuchungen vorgenommen, beispielsweise durch Messen an dem instandzuhaltenden Element, durch computersimulierte Berechnungen oder durch Laborversuche der tatsächlich auftretenden Erosion an einem instandzuhaltenden Element. In einem vierten Schritt erfolgt die Berechnung der Erosion, wobei in die Berechnung die Ergebnisse aus den Feldversuchen und Berechnungsformeln zur Berechnung des Verschleißes mit einfließen. Die bei der Berechnung erhaltenen Daten werden im fünften Schritt überprüft, wobei der Bereich und der Grad der Erosion ermittelt bzw. berechnet wird.

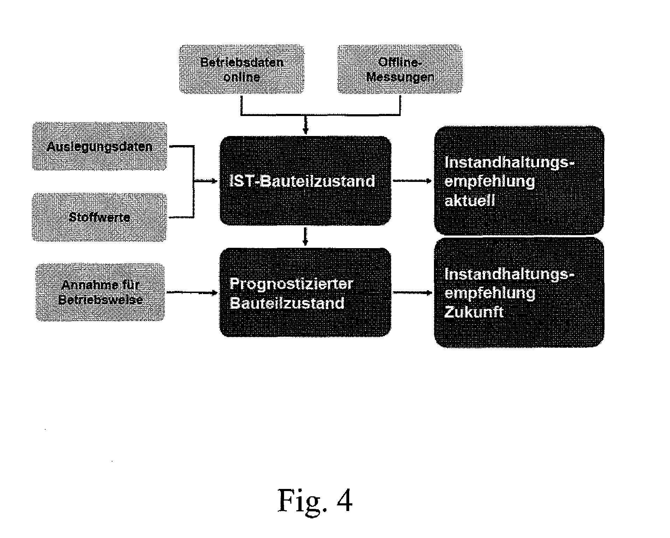

Fig. 4 zeigt ein Flussdiagramm für eine Ermittlung von Instandhaltungsempfehlungen gemäß dem erfindungsgemäßen Verfahren.

Für die Ermittlung der Zustandsgrößen werden als Eingangswerte online erfasste Betriebsdaten und Auslegungsdaten sowie Informationen in Form von Kennfeldern, aus zum Beispiel CFD-Rechnungen, und Ergebnisse aus Offline-Messungen verwendet.

Für die Berechnung der Lebensdauer von Überhitzerrohren werden vorzugsweise die folgenden Eingangsgrößen verwendet: Rohraußendurchmesser, Rohrwanddicke, Werkstoff, Rauchgastemperatur, Dampftemperatur, Dampfdruck, Dampfmassenstrom, Wärmeübergang Strahlung, Wärmeübergang Konvektion. Die Eingangsgrößen werden vorzugsweise unter Berücksichtigung der dampfseitigen Oxidation, der rauchgasseitigen Korrosion und dem Kriechverhalten zusammengestellt.

Die Algorithmen, die für die Berechnung der Ist-Bauteilzustände verwendet werden, gelten in gleicher Form für die Prognoseberechnungen in die Zukunft, lediglich die Eingangsgrößen unterscheiden sich. Für die Prognose in die Zukunft sind keine Betriebsdaten vorhanden, so dass für diese passende Werte vorgegeben werden müssen. In den meisten Fällen wird für die Prognoseberechnung und damit für die Annahme der Betriebsweise ein "worst case scenario" angenommen bzw. zugrunde gelegt. Die Prognoseberechnung erfolgt dabei individuell für jede Eingangsgröße eines instandzuhaltenden Elements bzw. individuell für jedes instandzuhaltende Element.

Basierend auf den Berechnungen der Ist-Bauteilzustände und der prognostizierten Bauteilzustände können Instandhaltungsempfehlungen für die jeweiligen instandzuhaltenden Elemente abgeleitet werden. Hierbei wird zwischen Empfehlungen für aktuell durchzuführende Instandhaltungstätigkeiten, basierend auf den Ist-Bauteilzuständen, und Empfehlungen für einen Zeitpunkt in der Zukunft, zum Beispiel zum Zeitpunkt der nächsten Revision, basierend auf den Prognosen, unterschieden.

Die in Fig. 4 gezeigte Ableitung der Instandhaltungsempfehlungen basiert auf der Methode, dass die ermittelte Zustandsgröße mit einem vorgegeben Grenzwert verglichen wird.

Um die Offline-Messungen der tatsächlichen Bauteilzustände strukturiert und zuverlässig zu ermöglichen, werden in dem computergestützten System für jedes instandzuhaltende Element Regeln aufgestellt, die eine Beauftragung abhängig von der Betriebszeit und dem ermittelten Bauteilzustand auslösen können. Die Beauftragung zur Offline-Bestimmung der Zustände erfolgt zur besseren Revisionsplanung vorzugsweise in einer vorher festgelegten Reihenfolge in Abhängigkeit der Priorität.

Die durch Offline-Messungen ermittelten Zustandsgrößen können in dem computergestützten System strukturiert abgelegt werden, in dem eine Messgröße einem definierten Zeitpunkt und einer definierten Position am instandzuhaltenden Element zugeordnet wird. Die in das System eingebrachten Werte für die Zustandsgrößen werden automatisiert ausgewertet, in dem sie mit den Grenzwerten für die Zustandsgrößen verglichen werden und daraus Empfehlungen für weitere Instandhaltungsmaßnahmen generiert werden können.

Die Eingabe von Informationen in das System, zum Beispiel Informationen aus einer Offline-Messung, und die Ausgabe von Ergebnissen, zum Beispiel Berechnungen und Instandhaltungsempfehlungen, erfolgen vorzugweise durch bzw. an das Betriebspersonal bzw. Instandhaltungspersonal der Kraftwerksanlage.

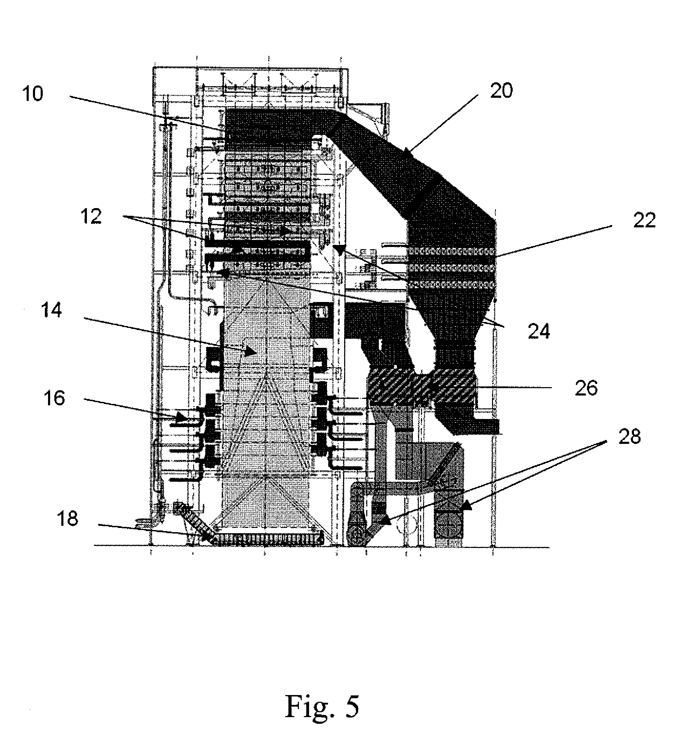

Fig. 5 zeigt instandzuhaltende Elemente eines Dampferzeugers einer Kraftwerksanlage, an welchen eine zustandsorientierte Instandhaltungsbestimmung erfolgen kann. Die instandzuhaltenden Elemente können beispielsweise ein Economiser 10, ein Überhitzer (UE) und ein Zwischenüberhitzer (ZUE) 12, eine Membranwand 14, ein Brenner 16, hier nicht gezeigte Ventile und Pumpen, ein Entaschungssystem 18, Rauchgas-, Kohlenstaub- und Luftkanäle 20, ein DeNOx 22, ein Sammler bzw. Rohrleitungen 24, ein regenerativer Luftvorwärmer 26, Gebläse 28 und/oder eine hier nicht gezeigte Mühle bzw. Zerteiler.

Soll beispielsweise der Bauteilzustand eines Überhitzerrohres bzw. eines Zwischenüberhitzerrohres 12 eines Dampferzeugers bestimmt werden, so werden durch Online-Messungen oder Offline-Messungen vorzugsweise die Übertemperatur, die rauchgasseitige Korrosion, die dampfseitige Oxidation, die Erosion durch Rußbläser, die Erosion durch Asche und/oder die Ermüdung durch Dehnungsbehinderung in Form von Messwerten ermittelt und in Form von Daten ausgewertet. Soll beispielsweise der Bauteilzustand einer Membranwand 14 eines Dampferzeugers bestimmt werden, so werden durch Online-Messungen oder Offline-Messungen vorzugsweise die thermische Ermüdung durch Wasserlanzenbläser, die Erosion durch Asche bzw. Rußbläser, die dampfseitige Oxidation, die rauchgasseitige Oxidation und/oder die Überhitzung aufgrund einer sich bildenden Oxidschicht in Form von Messwerten ermittelt und in Form von Daten ausgewertet. Soll beispielsweise der Bauteilzustand eines Economiser 10 eines Dampferzeugers bestimmt werden, so werden durch Online-Messungen oder Offline-Messungen vorzugsweise die Stillstandkorrosion, die Erosion durch Asche bzw. Rußbläser und/oder die Formänderung durch Temperaturdifferenz in Form von Messwerten ermittelt und in Form von Daten ausgewertet. Soll beispielsweise der Bauteilzustand eines Sammlers bzw. einer Rohrleitung 24 eines Dampferzeugers bestimm werden, so werden durch Online-Messungen oder Offline-Messungen vorzugsweise das Kriechen, die Übertemperatur und/oder die thermische Ermüdung in Form von Daten ermittelt und ausgewertet. Bei einer Bestimmung des Bauteilzustandes von Ventilen eines Dampferzeugers kann beispielsweise die Erosion durch Verunreinigungen, wie Magnetit, online oder offline bestimmt und ausgewertet werden.

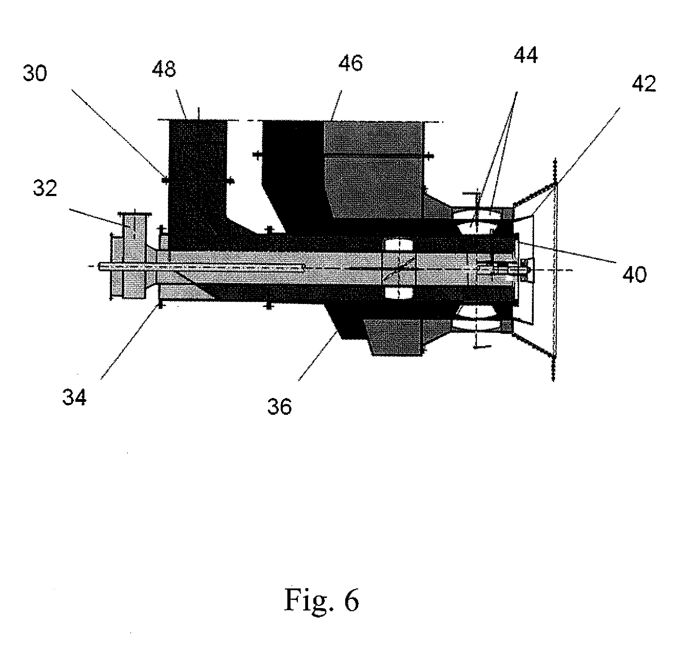

Bei einem wie in Fig. 6 gezeigten Brenners kann beispielsweise der Bauteilzustand der Leitbleche 30, des Kernluftrohres 32, des Pralltisches 34, des Primärluftdralls 36, des hier nicht gezeigten Flammenwächters, der Brennstoffdüse 40, der Sekundärluftkehle 42, der Sekundär- und Tertiärluftdralle 44, des Pendelbleches 46 und des Staubrohres 48 mittels des erfindungsgemäßen Verfahrens ermittelt und darüber die Instandhaltungsempfehlungen bestimmt werden. Bei den Leitblechen 30, dem Kernluftrohr 32, dem Pralltisch 34, dem Primärluftdrall 36, der Brennstoffdüse 40, des Sekundär- bzw. Tertiärluftdralls 44, des Pendelblechs 46 und des Staubrohres 48 wird hierfür vorzugsweise die Erosion an den jeweiligen Bauteilen online und/oder offline gemessen und ausgewertet. An dem Kernluftrohr 32 werden zusätzlich vorzugweise die Überhitzung und der Austritt an Öl und an der Brennstoffdüse 40 vorzugsweise zusätzlich die Korrosion und Verzunderung, die Koks- und Ascheanbackungen, die Ermüdung, der Thermoschock und/oder die Überhitzung online und/oder offline gemessen und ausgewertet. Zur Bestimmung des Bauteilzustandes des Flammenwächters wird vorzugsweise die Verschmutzung und die Überhitzung online und/oder offline gemessen und ausgewertet und zur Bestimmung der Bauteilzustände der Sekundärluftkehle wird vorzugsweise die Verzunderung, der Austritt an Öl, die Überhitzung und die Anbackungen online und/oder offline gemessen und ausgewertet.

Mittels Online-Messungen können beispielsweise Temperaturmessungen an verschiedenen Stellen und Durchflussmengenmessungen, zum Beispiel das Einströmen von Luft und Kohle, erfolgen. Für Offline-Messungen können beispielsweise Messstutzen für Messungen während Stillständen der instandzuhaltenden Elemente oder der Kraftwerksanlage vorgesehen sein.

Die Bestimmung der Bauteilzustände kann durch eine direkte Bestimmung aus Messwerten, durch eine Auswertung von Messwerten mit physikalischen und/oder empirischen Formeln, durch eine statistische Auswertung von Offline-Messwerten und Prüfungen und/oder durch eine Auswertung von Messwerten mittels Expertenwissen erfolgen. Eine direkte Bestimmung der Bauteilzustände aus Messwerten ist beispielsweise für die Bestimmungen von Temperaturen, wie Übertemperaturen hinter einem Hochdrucküberhitzer (HDU) oder Lagertemperaturen, oder Schwingungen von Mühlenlager, Pumpen oder dem Getriebe geeignet. Eine Auswertung von Messwerten mit physikalischen und/oder empirischen Formeln zur Bestimmung der Bauteilzustände ist beispielsweise für die Bestimmung der Lebensdauer von dickwandigen Bauteilen oder für die Bestimmung der Korrosion und Oxidation von Überhitzerrohren geeignet. Eine Bestimmung der Bauteilzustände in Form einer statistischen Auswertung von Offline-Messwerten und Prüfungen kann vorzugsweise bei einer Farbeindringprüfung von Sammler-Nippel-Verbindungen, Wanddickenmessungen von Kohlenstaubleitungen und Brennerkomponenten, Verschleißmessungen an Schlagrädern und Untersuchungen von Rohrschnitten zum Nachweis von Erosion, Korrosion und Oxidation erfolgen. Aus den sich aus den Auswertungen ergebenden Daten können empirische Berechnungsgleichungen erstellt werden. Bei Vorliegen einer großen Anzahl von Messwerten oder Daten kann gegebenenfalls eine Auswertung über neuronale Netze erfolgen. Die Zustandsbestimmung durch Auswerten von Messwerten mittels Expertenwissen kann beispielsweise mittels einer Fuzzy-Logik erfolgen.

Eine Berechnung der Lebensdauererwartung von Überhitzer- und Zwischenüberhitzerrohren erfolgt vorzugsweise dadurch, dass zunächst die Geometriedaten der Rohre festgelegt werden, welche sich aus der wärmetechnischen Auslegung der Rohre, sowie der herrschenden Dampfoxidation, der rauchgasseitigen Korrosion und einer Lebensdauerberechnung ergeben. Bei der Bestimmung der Dampfoxidation wird die Oxidschichtdicke über die Betriebszeit bestimmt, bei der Bestimmung der rauchgasseitigen Korrosion wird die Korrosionsrate über die Betriebszeit bestimmt und bei der Lebensdauerberechnung wird die verbrauchte Lebensdauer über der Betriebszeit bestimmt. Mittels der derart ermittelten bzw. festgelegten Geometriedaten der Rohre kann eine Online-Überwachung der Lebensdauererwartung der Rohre erfolgen, in dem zusätzlich zu den Geometriedaten online die Dampftemperatur, der Dampfdruck, der Dampfmassenstrom und/oder die Rauchgastemperatur bestimmt wird. Mit Hilfe der Online-Messungen und der dabei erhaltenen Daten können die Dampfoxidation, die rauchgasseitige Korrosion und die Lebensdauerberechnung an die aktuellen Messwerte angepasst werden, wodurch sich jeweils ein nachgerechter Verlauf und ein vorausberechneter Verlauf ergibt.

Alternativ ist es auch möglich zur Berechnung der Lebensdauererwartung online gemessene Daten bezüglich der Dampftemperatur, des Dampfdrucks, des Dampfmassenstroms und der Abgastemperatur zusammen mit den Daten der Rohre, wie Material, Außendurchmesser, Originalwanddicke, auszuwerten, um eine Lebensdauererwartung der Rohre ermitteln zu können. Aus den dabei resultierenden Ergebnissen können die Dicke der Oxidschicht auf der inneren Oberfläche der Rohre über der Zeit, der Materialverlust aufgrund von feuerseitiger Korrosion über der Zeit und die erwartete Lebensdauer in Abhängigkeit von Kriechdehnung, Oxidation und Korrosion ermittelt werden.

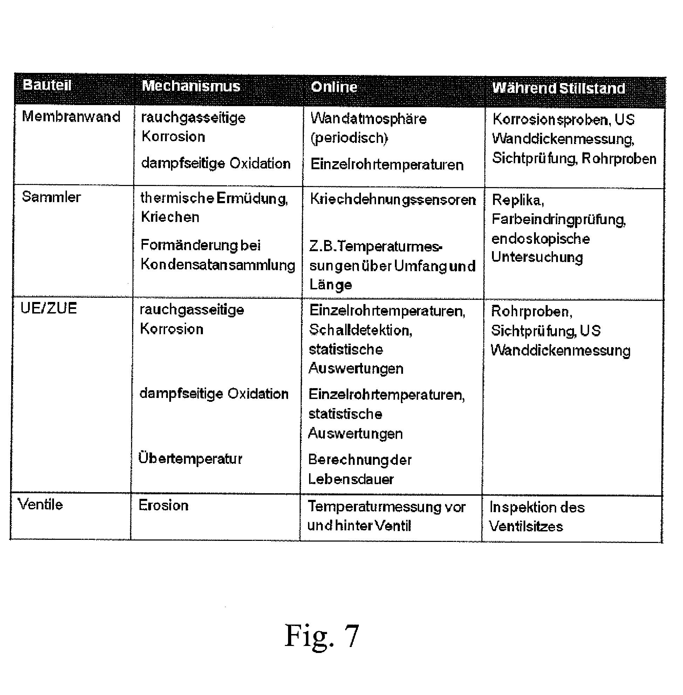

Zur Überwachung beispielsweise der Ascheerosion an Dampferzeugerbauteilen kann eine Ultraschallmessung der Wanddicke der jeweiligen instandzuhaltenden Elemente des Dampferzeugerbauteils in Form einer Offline-Messmethode oder einer statistischen Auswertung, wobei hierbei vorzugsweise Rohrschnitte im Werkstofflabor untersucht werden, oder einer Vorhersage mittels neuronaler Netzwerke erfolgen. Dabei erfolgt zunächst mittels empirischer Gleichungen eine Vorausberechnung und anschließend kann eine Optimierung der dabei entstehenden Ergebnisse durch neuronale Netze erfolgen. In Fig. 7 werden verschiedene Methoden einer Zustandsdiagnose bzw. Zustandsbestimmung für einzelne Bauteile bzw. instandzuhaltende Elemente eines Dampferzeugers aufgelistet.

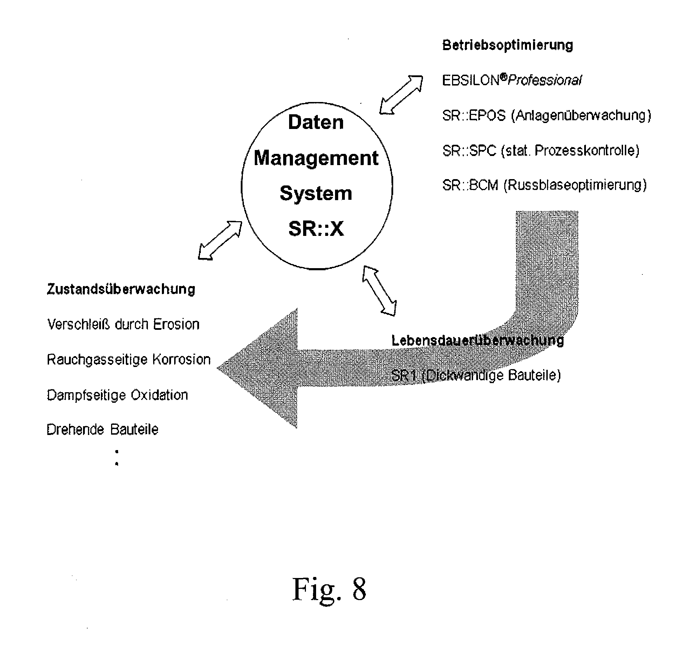

Fig. 8 zeigt ein Expertensystem zur Betriebsoptimierung mit einem Daten Management System SR::x einer SR-Systemfamilie, welches Daten einer Betriebsoptimierung, einer Lebensdauerüberwachung und einer Zustandsüberwachung managt. Das Expertensystem in Fig. 8 ist dabei anhand der Lebensdauerüberwachung dickwandiger Bauteile gezeigt. SR1 ist das SR-Produkt für die Berechnung der bereits konsumierten Lebensdauer von hoch beanspruchten Kesselkomponenten nach TRD/EN. Die Lebensdauerüberwachung erfolgt dabei vorzugsweise durch Bestimmung der Kriechschädigung, Klassifizierung der Betriebsstunden nach Betriebstemperatur und -druck, Bestimmung der Ermüdung durch Klassifizierung der Lastwechsel nach Betriebstemperatur und -spannung, Berechnungen zu Lastpotential, Offline-Was-Wenn-Berechnungen, Erweiterung auf Rohrleitungsüberwachung.

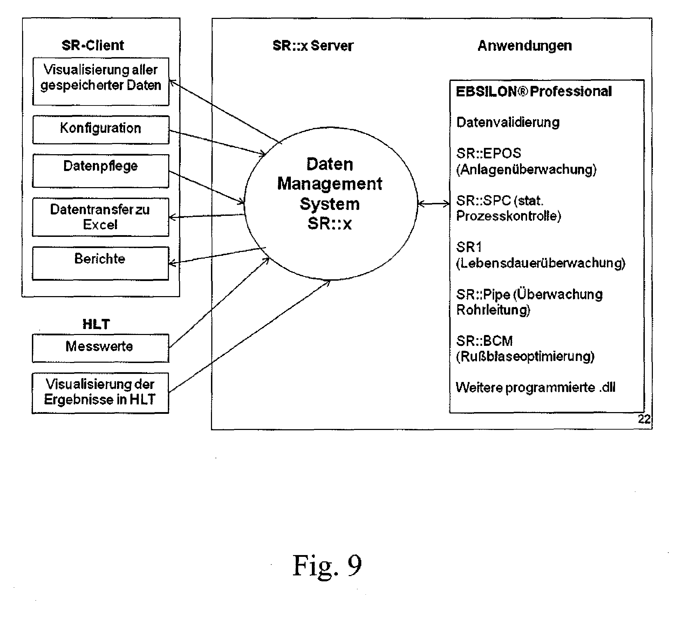

Fig. 9 zeigt eine allgemeine Systemstruktur einer SR-Systemfamilie mit einem SR-Client, einem SR::x Server, HLT und entsprechenden Anwendungen.

Sollen drehende Bauteile überwacht werden, kann der Verschleiß, Unwuchten, Montage-Ausrichtfehler und unzulässige Betriebszustände überwacht werden, vorzugsweise durch Kombination und Korrelation von Körperschallsignalen mit Prozessparametern wie Drehzahl und Leistung.

Die in der Beschreibung und den Ansprüchen verwendeten Begriffe "Bauteile" oder "Bauteilzustände" sind Synonyme für den Begriff des instandzuhaltenden Elementes wie er vorstehend und im Anspruch 1 Verwendung findet.

## Patentansprüche

1. Verfahren zur zustandsorientierten Instandhaltung eines, insbesondere fossilbefeuerten, vorzugsweise kohlebefeuerten, Kraftwerks auf Basis von automatisiert erstellten Instandhaltungsempfehlungen für die Kraftwerksanlage und/oder einzelne technische Komponenten oder technische Systeme der Kraftwerksanlage, die jeweils ein instandzuhaltendes Element ausbilden oder ein oder mehrere instandzuhaltende Elemente umfassen, wobei der Instandhaltungsbedarf eines oder mehrerer der instandzuhaltenden Elemente anhand mindestens eines vom jeweiligen Einsatz- oder Anwendungsfall des instandzuhaltenden Elementes abhängigen Einflussfaktor ermittelt wird,
**dadurch gekennzeichnet,**
**dass** der Einflussfaktor online bei Betrieb der Kraftwerksanlage zeitaktuell gemessen oder ermittelt und erfasst wird und/oder offline außer Betrieb gemessen oder ermittelt und erfasst wird
und
aus dem erfassten Einflussfaktor oder einer Kombination mehrerer erfasster Einflussfaktoren mittels einer wissensbasierten Prognose und/oder eines wissensbasierten Vergleichs eine zustandsorientierte Instandhaltungsempfehlung und/oder ein zustandsorientierter Instandhaltungsbedarf abgeleitet wird.

2. Verfahren nach Anspruch 1, **dadurch gekennzeichnet, dass** aus dem mindestens einen erfassten Einflussfaktor ein aktueller Zustand oder aktueller Zustandswert des instandzuhaltenden Elementes, insbesondere durch Bewertung und/oder Berechnung, erhalten und/oder
abgeleitet wird und aus diesem aktuellen Zustand oder aktuellen Zustandswert mittels der wissensbasierten Prognose und/oder des wissensbasierten Vergleichs die zustandsorientierte Instandhaltungsempfehlung und/oder der zustandsorientierte Instandhaltungsbedarf abgeleitet wird.

3. System zur Durchführung eines Verfahrens nach einem der Ansprüche 1 oder 2.

4. System nach Anspruch 3, **dadurch gekennzeichnet, dass** das System eine Lichtzeichenanlage mit einer Ampelfunktion aufweist.

## Geänderte Patentansprüche

### Geänderte Patentansprüche gemäss Regel 137(2) EPÜ.

**1.** Verfahren zur zustandsorientierten Instandhaltung eines, insbesondere fossilbefeuerten, vorzugsweise kohlebefeuerten, Kraftwerks auf Basis von automatisiert erstellten Instandhaltungsempfehlungen für die Kraftwerksanlage und/oder einzelne technische Komponenten oder technische Systeme der Kraftwerksanlage, die jeweils ein instandzuhaltendes Element ausbilden oder ein oder mehrere instandzuhaltende Elemente umfassen, wobei der Instandhaltungsbedarf eines oder mehrerer der instandzuhaltenden Elemente anhand mindestens eines vom jeweiligen Einsatz- oder Anwendungsfall des instandzuhaltenden Elementes abhängigen Einflussfaktor ermittelt wird,
**dadurch gekennzeichnet,**
**dass** als das zu prüfende instandzuhaltende Element das Element aus einer Vielzahl von gleichartigen Elementen ausgewählt wird, welches das höchst beanspruchteste ist, der Einflussfaktor online bei Betrieb der Kraftwerksanlage zeitaktuell gemessen oder ermittelt und erfasst wird und/oder offline außer Betrieb gemessen oder ermittelt und erfasst wird
und
aus dem erfassten Einflussfaktor oder einer Kombination mehrerer erfasster Einflussfaktoren mittels einer wissensbasierten Prognose und/oder eines wissensbasierten Vergleichs eine zustandsorientierte Instandhaltungsempfehlung und/oder ein zustandsorientierter Instandhaltungsbedarf abgeleitet wird.

**2.** Verfahren nach Anspruch 1, **dadurch gekennzeichnet, dass** aus dem mindestens einen erfassten Einflussfaktor ein aktueller Zustand oder aktueller Zustandswert des instandzuhaltenden Elementes, insbesondere durch Bewertung und/oder Berechnung, erhalten und/oder abgeleitet wird und aus diesem aktuellen Zustand oder aktuellen Zustandswert mittels der wissensbasierten Prognose und/oder des wissensbasierten Vergleichs die zustandsorientierte Instandhaltungsempfehlung und/oder der zustandsorientierte Instandhaltungsbedarf abgeleitet wird.

**3.** System zur Durchführung eines Verfahrens nach einem der Ansprüche 1 oder 2.

**4.** System nach Anspruch 3, **dadurch gekennzeichnet, dass** das System eine Lichtzeichenanlage mit einer Ampelfunktion aufweist.
